Europäisches Patentamt

European Patent Office

Office européen des brevets

(19)

(11) **EP 1 352 800 B1**

(12) **EUROPÄISCHE PATENTSCHRIFT**

(45) Veröffentlichungstag und Bekanntmachung des Hinweises auf die Patenterteilung:
**15.09.2004 Patentblatt 2004/38**

(51) Int Cl.⁷: **B60T 11/22**

(21) Anmeldenummer: **03007642.6**

(22) Anmeldetag: **03.04.2003**

(54) **Nachlaufbehälter für einen Geberzylinder eines hydraulischen Kraftübertragungssystems**

Fluid reservoir for a master cylinder in a hydraulic force transmission system

Réservoir de fluide pour un maître cylindre d'un système de transmission de force

(84) Benannte Vertragsstaaten:
**AT BE BG CH CY CZ DE DK EE ES FI FR GB GR HU IE IT LI LU MC NL PT RO SE SI SK TR**

(30) Priorität: **13.04.2002 DE 10216362**

(43) Veröffentlichungstag der Anmeldung:
**15.10.2003 Patentblatt 2003/42**

(73) Patentinhaber: **FTE automotive GmbH & Co. KG
96106 Ebern (DE)**

(72) Erfinder:
• **Bornkessel, Diethard
96126 Ermershausen (DE)**
• **Leuschke, Rainer
48178 South Lyon, Michigan (US)**
• **Scott, Elliott
48377 Novi, Michigan (US)**

(74) Vertreter: **Oppermann, Mark, Dipl.-Ing.
Oppermann & Oppermann
Patentanwälte
Am Wiesengrund 35
63075 Offenbach (DE)**

(56) Entgegenhaltungen:
**AU-B- 498 927        US-A- 3 403 517
US-A- 5 025 628**

**Beschreibung**

Die vorliegende Erfindung bezieht sich auf einen Nachlaufbehälter für einen Geberzylinder eines hydraulischen Kraftübertragungssystems nach dem Oberbegriff des Patentanspruchs 1. Insbesondere bezieht sich die Erfindung auf einen Nachlaufbehälter für einen Geberzylinder einer hydraulischen Kupplungsbetätigung oder Bremsanlage, wie sie massenweise in der Automobilindustrie zum Einsatz kommen.

Bei einer hydraulischen Bremsanlage stellt der Hauptbremszylinder den Geberzylinder dar, mit dem der als Vorratskammer für die Bremsflüssigkeit dienende Nachlauf- oder Ausgleichsbehälter so verbunden ist, daß im unbetätigten Zustand des Hauptbremszylinders ein Flüssigkeitsaustausch sowohl mit dessen Primär- der Druckraum über eine Druckausgleichsbohrung als auch mit dem vom Druckraum mittels des sogenannten Primärnutrings getrennten Sekundär- oder Nachlaufraum über eine Nachlaufbohrung erfolgen kann, im betätigten Zustand jedoch nur mit dem Nachlaufraum, nachdem der Primärnutring die Druckausgleichsbohrung überfahren hat.

Genauer gesagt muß bei Ruhestellung des Hauptbremszylinderkolbens für die Möglichkeit eines Druckausgleichs gesorgt werden, damit bei nichtbetätigter Bremse eine Temperaturveränderung der Bremsflüssigkeit nicht zu einer Druckänderung im Bremssystem führt, und damit anschließend an Nachsaugvorgänge der Druck im Hauptbremszylinder sich stets auf den Umgebungsdruck abbaut.

Dies geschieht allgemein durch die Öffnung einer Verbindung des Hauptbremszylinderdruckraums zum Nachlaufbehälter. Dieser atmosphärisch belüftete Behälter beinhaltet die Bremsflüssigkeit, welche erforderlich ist, um das im Bremssystem benötigte Mehrvolumen z.B. durch Verschleiß der Bremsbeläge in das Bremssystem immer sicher nachspeisen zu können, weshalb solche Behälter auch Ausgleichsbehälter genannt werden. Außerdem versorgt er das vom Bremssystem kurzfristig beim sogenannten Nachsaugvorgang benötigte Volumen und nimmt das rückströmende Nachsaugvolumen wieder auf. Zu einem solchen Nachsaugvorgang kommt es jedesmal dann, wenn der Hauptbremszylinderkolben schneller in seine Ruhelage zurückkehrt, als die Kolben der Betätigungszylinder der Radbremsen. Drücken diese dann das zum Anlegen der Bremse benötigte Volumen zum Hauptbremszylinder zurück, so strömt dieses durch die inzwischen wieder offene Druckausgleichsbohrung in den Nachlaufbehälter. Des weiteren sorgt der Nachlaufbehälter für den Ausgleich möglicher Volumensschwankungen in der hydraulischen Bremsanlage, die bei ABS (Anti-Blockier-System)- oder ASR (Antriebs-Schlupf-Regelung)-Funktionen auftreten können. Schließlich dient der in der Regel an der höchsten Stelle der im Kraftfahrzeug eingebauten hydraulischen Bremsanlage angeordnete Nachlaufbehälter auch der Entlüftung des Bremssystems.

Entsprechendes gilt für eine hydraulische Kupplungsbetätigung, bei der an die Stelle des Hauptbremszylinders und der Betätigungszylinder der Radbremsen der Kupplungsgeberzylinder bzw. der Kupplungsnehmerzylinder treten. Vom Nachlaufbehälter auszugleichende Volumensschwankungen der Hydraulikflüssigkeit können hier z.B. bei schnellen Schaltfolgen für den Ein- oder Ausrückvorgang der Kupplung insbesondere bei automatisiertem Kupplungsbetrieb auftreten bzw. durch Kupplungsverschleiß oder Temperaturschwankungen im System bedingt sein.

In diesem Zusammenhang offenbart die gattungsbildende DE-A-100 38 982 einen Flüssigkeitsbehälter für ein Druckmittel einer hydraulischen Anlage, wie einer Brems- oder Kupplungsvorrichtung, der einen Innenraum für das Druckmittel aufweist. Dieser Innenraum wird (u.a.) durch einen festen Boden eines Behältergehäuses und eine flexible Behälterdecke begrenzt, welche durch einen am Behältergehäuse mittels eines hinterlüfteten Deckels befestigten Faltenbalg gebildet und nach Maßgabe des Behälterfüllstands in Richtung des Bodens bzw. davon weg bewegbar ist. Am bzw. in der Nähe des Bodens ist eine Leitung bzw. ein Anschluß zur hydraulischen Anlage vorgesehen. Die durch den Faltenbalg gebildete flexible Behälterdecke hat schließlich eine im wesentlichen flüssigkeitsdichte aber luftdurchlässige Verbindung zur Atmosphäre hin, welche durch eine gasdurchlässige Membran oder ein Ventil mit einem verschließbaren Spalt gebildet wird und dazu dient, einen Druckausgleich zwischen einem im befüllten Zustand der hydraulischen Anlage in dem Innenraum belassenen Luftvolumen und der Atmosphäre zu ermöglichen.

Dieser Aufbau des Flüssigkeitsbehälters hat sich insofern als vorteilhaft erwiesen, als gegenüber vorbekannten Lösungen, bei denen eine luftdurchlässige Verbindung zur Atmosphäre hin alleine durch ein in einer festen Behälterdecke vorgesehenes Dichtungslabyrinth bereitgestellt wird, nicht mehr die Gefahr besteht, daß das Dichtungslabyrinth verstopft oder einen verhältnismäßig großen Schmutz- bzw. Wassereintrag zuläßt. Gegenüber anderen vorbekannten Lösungen, bei denen zum Schutz gegen Schmutz- und/oder Wassereintrag eine zum Flüssigkeitsbehälter abgedichtete, im wesentlichen luftundurchlässige Elastomermembran oder ein geschlossener Faltenbalg eingesetzt wird, die/der sich dem Niveau des Druckmittels infolge ihrer/seiner elastischen Verformbarkeit anpassen kann und einen Unterdruck vermeiden soll, besteht ein Vorteil darin, daß ein etwa im hydraulischen System vorhandener oder sich bildender Luftüberschuß nach außen abgeführt werden kann und nicht als Luftfeder wirkt, welche in unerwünschter Weise Einfluß auf den Druck des Druckmittels nimmt.

Gleichwohl ist der in der DE-A-100 38 982 vorgeschlagene Flüssigkeitsbehälter in funktioneller Hinsicht noch verbesserungsbedürftig.

Heutzutage ist es in der Automobilindustrie üblich, das Kraftfahrzeug für die Endmontage auf einem Drehgestell zu verankern, damit das Kraftfahrzeug in der Regel um seine Längsachse um 180° gedreht werden kann. So ist es z.B. einfacher, Bodengruppen zu montieren, weil Montagepositionen in Überkopflage vermieden werden können, oder das Kraftfahrzeug in eine definierte Relativlage zu etwa einem Schweißroboter zu bringen. Bei dieser Endmontage wird das Kraftfahrzeug auch mit befüllten hydraulischen Systemen, z. B. befüllter hydraulischer Bremsanlage und/oder Kupplungsbetätigung gedreht. Hierbei besteht sodann die Gefahr, daß die bewußt im Innenraum des Flüssigkeitsbehälter belassene Luft über den Anschluß zur hydraulischen Anlage in den Hauptbremszylinder bzw. Kupplungsgeberzylinder wandert, was im Betrieb des hydraulischen Systems zu Funktionsbeeinträchtigungen führen kann.

Ein weiteres Problem besteht hier darin, daß der Faltenbalg im Flüssigkeitsbehälter bei einer sehr schnellen Betätigung des hydraulischen Systems und einem sich deshalb rasch ändernden Füllstand im Flüssigkeitsbehälter womöglich in die im Flüssigkeitsbehälter enthaltene Brems- bzw. Hydraulikflüssigkeit eintaucht. Dabei besteht eine gewisse Wahrscheinlichkeit, daß die gasdurchlässige Membran bzw. das Ventil mit dem verschließbaren Spalt am Faltenbalg mit der Brems- bzw. Hydraulikflüssigkeit derart benetzt wird, daß ein einwandfreier Druckausgleich zwischen dem Innenraum des Flüssigkeitsbehälters und der Atmosphäre nicht mehr gewährleistet ist. Auch dies kann im Betrieb des hydraulischen Systems zu Funktionsbeeinträchtigungen führen.

AU 498 927 B zeigt einen Nachlaufbehälter mit einer flüssigkeitsdichten, flexiblen Behälterdecke, dessen hydraulischer Anschluß zum Geberzylinder einen in die Flüssigkeitskammer vorstehenden Fortsatz aufweist.

Schließlich offenbart die DE-A-24 40 000 einen Ölbehälter, insbesondere für hydrostatische Lenkanlagen von Kraftfahrzeugen, bestehend aus einem Behältertopf mit einem Deckel, einem ringzylinderförmigen, abgedeckten Filtereinsatz, einer innerhalb des Filtereinsatzes einmündenden Zulaufleitung und einer außerhalb des Filtereinsatzes in das Innere des Behältertopfes einmündenden Ablaufleitung. Bei diesem Stand der Technik sind an der Zulaufleitung in der Nähe der tiefst gelegenen Stelle des Behältertopfes zwischen dem Boden des Behältertopfes und der unteren Abdekkung des Filtereinsatzes eine durch einen geringen Unterdruck in der Zulaufleitung aufsteuerbare Rücksaugeinrichtung und zwischen der Rücksaugeinrichtung und dem Innenraum des Filtereinsatzes ein in Richtung auf den Innenraum des Filtereinsatzes öffnendes Rückschlagventil angeordnet. Hierdurch soll bei einem Ölverlust der hydrostatischen Lenkanlage eine für die sichere Lenkbarkeit des Kraftfahrzeugs erforderliche Ölmenge zur Verfügung gestellt werden.

Ausgehend vom Stand der Technik gemäß der DE-A-100 38 982 liegt der Erfindung die Aufgabe zugrunde, einen Nachlaufbehälter für einen Geberzylinder eines hydraulischen Kraftübertragungssystems zu schaffen, der die Vorteile eines Nachlaufbehälters aufzeigt, welcher eine mit einer im wesentlichen flüssigkeitsdichten aber luftdurchlässigen Verbindung versehene, flexible Behälterdecke hat, aber die damit im Stand der Technik verbundenen Funktionsbeeinträchtigungen im Betrieb des hydraulischen Systems vermeidet.

Diese Aufgabe wird durch die im Patentanspruch 1 angegebenen Merkmale gelöst. Vorteilhafte und/oder zweckmäßige Weiterbildungen der Erfindung sind Gegenstand der Patentansprüche 2 bis 13.

Erfindungsgemäß weist bei einem Nachlaufbehälter für einen Geberzylinder eines hydraulischen Kraftübertragungssystems, insbesondere einer hydraulischen Kupplungsbetätigung oder Bremsanlage, der eine Flüssigkeitskammer hat, welche durch einen Behälterboden und eine flexible Behälterdecke begrenzt ist, die nach Maßgabe des Behälterfüllstands in Richtung des Behälterbodens bzw. davon weg bewegbar ist, wobei am Behälterboden eine hydraulische Verbindung zum Geberzylinder vorgesehen ist, während die Behälterdecke eine im wesentlichen flüssigkeitsdichte aber luftdurchlässige Verbindung zur Atmosphäre aufweist, um einen Druckausgleich zwischen einem im befüllten Zustand des Kraftübertragungssystems in der Flüssigkeitskammer belassenen Luftvolumen und der Atmosphäre zu ermöglichen, die hydraulische Verbindung zum Geberzylinder einen in die Flüssigkeitskammer hinein vorstehenden Fortsatz auf, der in der Flüssigkeitskammer ein vorbestimmtes Volumen definiert, welches größ'er ist als das im befüllten Zustand des Kraftübertragungssystems in der Flüssigkeitskammer belassene Luftvolumen.

Durch diese denkbar einfache und wirtschaftliche Ausgestaltung des Nachlaufbehälters kann das mit Hydraulikflüssigkeit befüllte hydraulische Kraftübertragungssystem im im Kraftfahrzeug montierten Zustand zusammen mit dem Kraftfahrzeug auf einem Drehgestell um 180° gedreht werden, ohne daß die Gefahr besteht, daß das in der Flüssigkeitskammer belassene Luftvolumen, welches infolge der Kombination einer flexiblen Behälterdecke mit einer im wesentlichen flüssigkeitsdichten aber luftdurchlässigen Verbindung zur Atmosphäre unabhängig vom Betätigungszustand des hydraulischen Kraftübertragungssystem im wesentlichen konstant bleibt, oder ein Teil dieses Luftvolumens über den Geberzylinder in das hydraulische Kraftübertragungssystem gelangt. Bei einer Drehung des Nachlaufbehälters wandert das in der Flüssigkeitskammer des Nachlaufbehälters belassene Luftvolumen nämlich entsprechend der physikalischen Gesetzmäßigkeit entlang der Behälterwände zum Behälterboden und kann von dort nicht über die hydraulische Verbindung zum Geberzylinder gelangen, weil der Fortsatz der hydraulischen Verbindung definiert in die Flüssigkeitskammer hinein vorsteht und dies somit verhindert. Vielmehr wird das in der Flüssigkeitskammer des Nachlaufbehälters belassene Luftvolumen vollständig in dem von dem Fortsatz der hydraulischen Verbindung in der Flüssigkeitskammer definierten, vorbestimmten Volumen gefangen bzw. gesammelt.

Nach der Lehre des Patentanspruchs 2 ist der Fortsatz der hydraulischen Verbindung im wesentlichen mittig bzw. zentral am Behälterboden vorgesehen. Durch diese Ausgestaltung ist in jeder Drehwinkellage des Nachlaufbehälters - etwa auch bei einer Drehung aus der Einbau- und Gebrauchslage um nur 90° um eine Querachse des Nachlaufbehälters - zuverlässig dafür Sorge getragen, daß keinerlei Luft über die hydraulische Verbindung zum Geberzylinder in das hydraulische Kraftübertragungssystem gelangen kann.

Gemäß einer insbesondere herstellungstechnisch vorteilhaften Weiterbildung der Erfindung ist der Fortsatz der hydraulischen Verbindung rohrförmig, wie im Patentanspruch 3 angegeben. Einer einfachen und kostengünstigen Herstellung des Nachlaufbehälters förderlich sind ebenfalls die Merkmale des Patentanspruchs 4, gemäß dem der Fortsatz der hydraulischen Verbindung einstückig mit dem Behälterboden ausgebildet ist, insbesondere wenn diese Teile aus Kunststoff spritzgegossen werden.

Alternativ dazu sieht der Patentanspruch 5 vor, daß der Fortsatz der hydraulischen Verbindung durch ein in den Behälterboden einsteckbares Röhrchen ausgebildet ist. Somit ist es im Bedarfsfalle möglich, die Länge des Röhrchens als Wechsel- bzw. Steckteil zu variieren, um damit unterschiedlich große eingeschlossene Luftvolumina in der Flüssigkeitskammer des Nachlaufbehälters zu ermöglichen.

Gemäß dem Patentanspruch 6 ist die flexible Behälterdecke durch einen Rollbalg ausgebildet, der eine Mehrzahl von wenigstens im unverformten Zustand im wesentlichen konzentrischen, d.h. teleskopartig ineinandergreifenden Wandabschnitten aufweist.

Ein solcher Rollbalg hat im Vergleich zu den im Stand der Technik an Nachlaufbehältern bekannten Faltenbälgen eine in axialer Richtung geringere Steifigkeit bzw. zu überwindende Faltkraft, die es der Behälterdecke gestattet, schneller auf eine Änderung des Behälterfüllstands zu reagieren. Insbesondere kann die Behälterdecke somit der Hydraulikflüssigkeit bei einem schnell steigenden Behälterfüllstand ausweichen, ohne daß die Gefahr besteht, daß die im wesentlichen flüssigkeitsdichte aber luftdurchlässige Verbindung zur Atmosphäre, bei der es sich z.B. um eine gasdurchlässige Membran oder ein Ventil mit einem verschließbaren Spalt handeln kann, von der Hydraulikflüssigkeit überhaupt oder übermäßig benetzt wird, so daß hier die Ventilfunktion nicht beeinträchtigt wird.

Die Verwendung eines Rollbalgs hat weiterhin den Vorteil, daß die Behälterdecke im Vergleich zu der bekannten Faltenbalglösung bei gleichem Bauraum ein größeres Hubvermögen aufweist. Dies ermöglicht den Einsatz des erfindungsgemäßen Nachlaufbehälters an hydraulischen Kupplungsbetätigungen für sogenannte SAC-Kupplungen, bei denen aufgrund des fehlenden Verschleißausgleichs der Füllstand im Nachlaufbehälter mit zunehmendem Kruppplungsverschleiß abnimmt. Dabei kann die durch den Rollbalg ausgebildete Behälterdecke dem abnehmenden Füllstand folgen, so daß in der Flüssigkeitskammer kein unerwünschter Unterdruck entsteht, der sich bei Verwendung eines Faltenbalgs einstellen würde, welcher dem abnehmenden Füllstand nicht folgen könnte.

Ein weiterer Vorteil des Rollbalgs ist schließlich darin zu sehen, daß er im Vergleich zu einem Faltenbalg eine größere Dauerfestigkeit / geringere Biegebeanspruchung an den dünnwandigen, stehend angeordneten Wandabschnitten aufweist.

Nach der Lehre des Patentanspruchs 7 rollt der Rollbalg bei einer Bewegung der Behälterdecke in Richtung des Behälterbodens bzw. davon weg in definierter Weise auf einer zylindrischen Seitenwand des Nachlaufbehälters ab und erfährt damit eine zusätzliche Abstützung, die sehr geringe Rollbalgwandstärken gestattet, was wiederum einer leichten axialen Beweglichkeit der Behälterdecke förderlich ist.

Der Patentanspruch 8 sieht in einer zweckmäßigen Weiterbildung der Erfindung vor, daß der Rollbalg einen ringförmigen Befestigungsflansch aufweist, der zwischen einer Seitenwand des Nachlaufbehälters und einem am Nachlaufbehälter lösbar befestigten Deckel eingespannt ist. Gemäß dem Patentanspruch 9 ist hierbei der Befestigungsflansch vorteilhaft mit zwei ringförmigen, konzentrischen Dichtwulsten versehen, wobei der innere Dichtwulst einen Durchmesser hat, der kleiner ist als ein mittlerer Durchmesser der Seitenwand des Nachlaufbehälters, während der äußere Dichtwulst einen Durchmesser aufweist, der größer ist als der mittlere Durchmesser der Seitenwand. Vorzugsweise sind diese Dichtwulste entsprechend dem Patentanspruch 10 an der vom Behälterboden abgewandten Seite des Befestigungsflansches vorgesehen. Im Ergebnis wirken die Dichtwulste am mittels des Deckels gegen die Seitenwand des Nachlaufbehälters verspannten Befestigungsflansch des Rollbalgs mit der Seitenwand derart zusammen, daß hier eine zuverlässig dichte Verbindung vorliegt und keinerlei Gefahr besteht - selbst nicht bei mit Hydraulikflüssigkeit benetzter Seitenwand - daß sich der Rollbalg löst, d.h. der Flansch des Rollbalgs bei einer Verformung des Rollbalgs zwischen der Seitenwand des Nachlaufbehälters und dem Deckel herausgezogen wird.

Der Patentanspruch 11 sieht vor, daß der Rollbalg drei miteinander elastisch verbundene Wandabschnitte hat, wobei die beiden inneren Wandabschnitte eine Wandstärke aufweisen, die kleiner ist als die Wandstärke des äußeren Wandabschnitts, so daß bei einer dem Füllstand in dem Nachlaufbehälter folgenden Bewegung der Behälterdecke eine Verformung des Rollbalgs in vorteilhafter Weise vornehmlich an den beiden inneren Wandabschnitten stattfindet, während der äußere Wandabschnitt den Rollbalg im Nachlaufbehälter zentriert.

Zweckmäßig hat der Rollbalg einen sich im wesentlichen senkrecht zu dessen Wandabschnitten erstreckenden, vorzugsweise zum Großteil die Behälterdecke bildenden Bodenabschnitt, der eine zentrale Öffnung besitzt, in die ein Ventilteil lösbar eingeknüpft ist, das der im wesentlichen flüssigkeitsdichten aber luftdurchlässigen Verbindung zur Atmosphäre dient, wie im Patentanspruch 12 angegeben.

Grundsätzlich ist es schließlich möglich, daß der Nachlaufbehälter einstückig mit einem Gehäuse des Geberzylinders ausgebildet ist. Bevorzugt wird aber, wenn der Nachlaufbehälter entsprechend dem Patentanspruch 13 separat von dem Gehäuse des Geberzylinders ausgebildet ist, wobei der Nachlaufbehälter mit dem Geberzylinder unmittelbar steckverbunden sein kann oder aber mittels eines Schlauchs mit dem Geberzylinder verbunden wird, was eine größere Flexibilität im Hinblick auf die möglichen Anbringungsorte des Nachlaufbehälters gewährleistet.

Im folgenden wird die Erfindung anhand eines bevorzugten Ausführungsbeispiels unter Bezugnahme auf die beigefügten, teilweise schematischen Zeichnungen näher erläutert. Darin zeigen:

Fig. 1   eine schematische Darstellung einer hydraulischen Kupplungsbetätigung mit einem erfindungsgemäßen Nachlaufbehälter, als Beispiel für einen bevorzugten Anwendungsort des erfindungsgemäßen Nachlaufbehälters, und

Fig. 2   eine Schnittansicht des in Fig. 1 dargestellten Nachlaufbehälters entsprechend der Schnittverlaufslinie II-II in Fig. 1 in einem vergrößerten Maßstab.

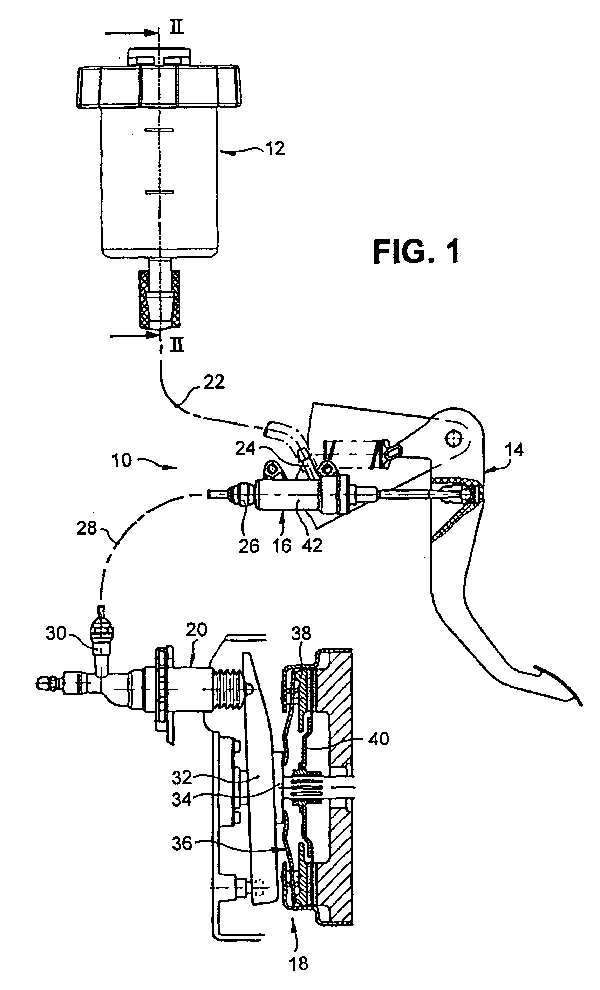

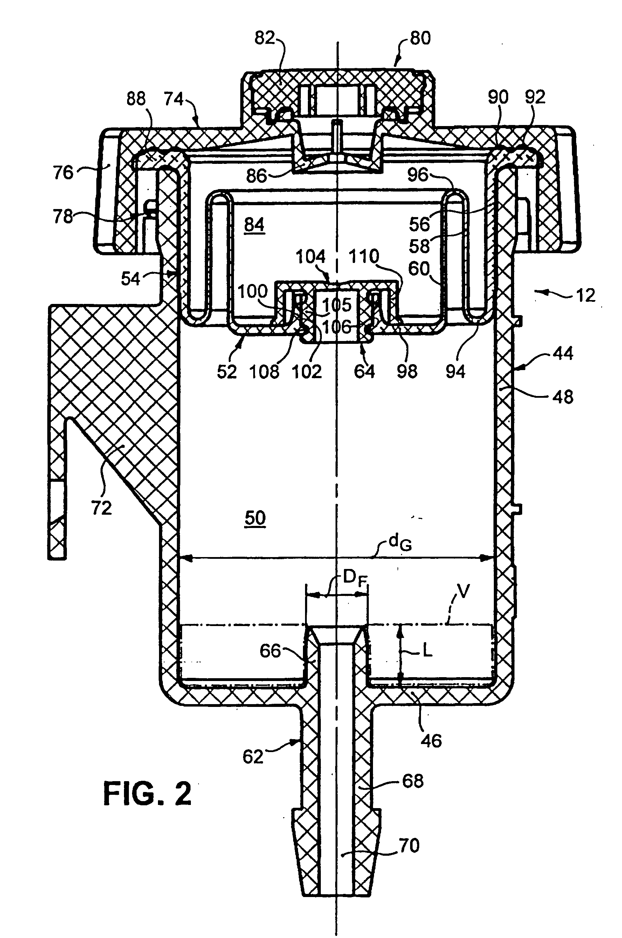

Die Fig. 1 zeigt eine insgesamt mit 10 bezeichnete hydraulische Kupplungsbetätigung für ein Kraftfahrzeug als Beispiel für ein hydraulisches Kraftübertragungssystem, deren Hydraulikteil einen nachfolgend unter Bezugnahme auf die Fig. 2 noch näher beschriebenen, mit Hydraulikflüssigkeit gefüllten Nachlaufoder Ausgleichsbehälter 12, einen mit einem Kupplungspedal 14 wirkverbundenen Kupplungsgeberzylinder 16 und einen mit einer Kupplung 18 wirkverbundenen Kupplungsnehmerzylinder 20 aufweist. Der Nachlaufbehälter 12 ist mittels eines Hydraulikschlauchs 22 an einen Nachlauf- und Druckausgleichsanschluß 24 des Kupplungsgeberzylinders 16 angeschlossen, dessen Druckanschluß 26 mittels einer Hydraulikleitung 28 mit einem Druckanschluß 30 des Kupplungsnehmerzylinders 20 verbunden ist. Sämtliche in Fig. 1 dargestellten Teile bis auf den Nachlaufbehälter 12 sind an sich bekannt und werden daher nur insofern beschrieben, als es für das Verständnis der vorliegenden Erfindung erforderlich erscheint.

Zur ebenfalls an sich bekannten Funktion der hydraulischen Kupplungsbetätigung 10 sei an dieser Stelle nur soviel angemerkt, daß der durch Niedertreten des Kupplungspedals 14 im Kupplungsgeberzylinder 16 erzeugte Druck über die Flüssigkeitssäule in der Hydraulikleitung 28 auf den Kupplungsnehmerzylinder 20 übertragbar ist. Der Kupplungsnehmerzylinder 20 beaufschlagt sodann über eine Ausrückgabel 32 ein Ausrücklager 34 der Kupplung 18 mit einer Betätigungskraft, um über einen Ausrückmechanismus 36 eine Kupplungsdruckplatte 38 von einer Kupplungsscheibe 40 und somit den hier nicht gezeigten Motor vom ebenfalls nicht dargestellten Getriebe des Kraftfahrzeugs zu trennen.

Wie eingangs bereits erwähnt, ist der Kupplungsgeberzylinder 16 in an sich bekannter Weise derart ausgebildet, daß im unbetätigten Zustand des Kupplungsgeberzylinders 16 der Nachlaufbehälter 12 über den Hydraulikschlauch 22 mit (1) einem Primäroder Druckraum (nicht dargestellt) des Kupplungsgeberzylinders 16 über eine vom Nachlauf- und Druckausgleichsanschluß 24 abzweigende Druckausgleichsbohrung (nicht dargestellt) und (2) einem vom Druckraum mittels eines Primärnutrings (nicht dargestellt) getrennten Sekundär- oder Nachlaufraum (nicht dargestellt) des Kupplungsgeberzylinders 16 über eine ebenfalls vom Nachlauf- und Druckausgleichsanschluß 24 abzweigende Nachlaufbohrung (nicht dargestellt) hydraulisch kommunizieren kann. Hiervon besteht im betätigten Zustand des Kupplungsgeberzylinders 16 nur noch die hydraulische Verbindung zwischen dem Nachlaufbehälter 12 und dem Nachlaufraum des Kupplungsgeberzylinders 16, nachdem der Primärnutring an dem mittels des Kupplungspedals 14 verschobenen Kolben (nicht'dargestellt) des Kupplungsgeberzylinders 16 die Druckausgleichsbohrung überfahren hat, damit im Druckraum des Kupplungsgeberzylinders 16 ein Druck aufgebaut werden kann, der über die Hydraulikleitung 28 auch im Kupplungsnehmerzylinder 20 ansteht. Es ist ersichtlich, daß der Nachlaufbehälter 12 somit Volumensschwankungen der Hydraulikflüssigkeit auszugleichen vermag, die beim Ein- oder Ausrückvorgang der Kupplung auftreten bzw. durch Kupplungsverschleiß oder Temperaturschwankungen im System bedingt sein können.

Obgleich der Nachlaufbehälter 12 im hier dargestellten Ausführungsbeispiel als separate Systemkomponente gezeigt ist, die mit dem Kupplungsgeberzylinder 16 über den Hydraulikschlauch 22 verbunden ist, könnte der Nachlaufbehälter 12 auch mit dem Kupplungsgeberzylinder 16 unmittelbar verbunden, z.B. darauf aufgesteckt sein oder einstückig mit einem Gehäuse 42 des Kupplungsgeberzylinders 16 ausgebildet sein.

Die Fig. 2 zeigt den Nachlaufbehälter 12 im unbefüllten, nicht an die hydraulische Kupplungsbetätigung 10 angeschlossenen Zustand in seiner Gebrauchslage. In Fig. 2 sind des weiteren zur Vereinfachung der Darstellung sämtliche elastischen Teile im unverformten Zustand gezeigt.

Gemäß Fig. 2 hat der Nachlaufbehälter 12 ein vorzugsweise aus einem Kunststoff wie Polyamid spitzgegossenes, im wesentlichen topfförmiges Gehäuse 44 mit einem ebenen Behälterboden 46 und einer sich daran anschließenden, im wesentlichen ringzylindrischen Seitenwand bzw. Behälterwand 48. In dem Gehäuse 44 befindet sich eine im wesentlichen zylindrische Flüssigkeitskammer 50, die nach unten durch den Behälterboden 46 und seitlich durch die Behälterwand 48 begrenzt ist. Nach oben ist die Flüssigkeitskammer 50 durch eine flexible Behälterdecke 52 begrenzt, die nach Maßgabe des Behälterfüllstands in Richtung des Behälterbodens 46 bzw. davon weg bewegbar und nach einem wesentlichen Merkmal durch einen am Gehäuse 44 befestigten Rollbalg 54 ausgebildet ist. Der nachfolgend noch näher beschriebene, aus einem elastischen Kunststoff wie EPDM (von <u>E</u>thylen-<u>P</u>ropylen-<u>D</u>ien und Poly<u>m</u>ethylen abgeleitete Abkürzung) bestehende Rollbalg 54 hat hierfür eine Mehrzahl von wenigstens im unverformten Zustand im wesentlichen konzentrischen, d.h. teleskopartig ineinandergreifenden ringzylindrischen Wandabschnitten 56, 58, 60, die elastisch miteinander verbunden sind. Während am Behälterboden 46 eine hydraulische Verbindung 62 zum Kupplungsgeberzylinder 16 vorgesehen ist, weist die flexible Behälterdecke 52 eine im wesentlichen flüssigkeitsdichte aber luftdurchlässige Verbindung 64 zur Atmosphäre auf, um einen Druckausgleich zwischen einem im befüllten Zustand der hydraulischen Kupplungsbetätigung 10 in der Flüssigkeitskammer 50 belassenen Luftvolumen und der Atmosphäre zu ermöglichen. Wie nachfolgend ebenfalls noch näher beschrieben wird, weist die hydraulische Verbindung 62 zum Kupplungsgeberzylinder 16 nach einem weiteren wesentlichen Merkmal einen in die Flüssigkeitskammer 50 hinein vorstehenden Fortsatz 66 auf, der in der Flüssigkeitskammer 50 ein vorbestimmtes Volumen V definiert, welches größer ist als das im befüllten Zustand der hydraulische Kupplungsbetätigung 10 in der Flüssigkeitskammer 50 belassene Luftvolumen und in Fig. 2 mit einer strichpunktierten Linie angedeutet ist.

Aus Fig. 2 ist unmittelbar ersichtlich, daß das vorbestimmte Volumen V von den Außenabmaßen des im wesentlichen mittig am Behälterboden 46 vorgesehenen und einstückig damit ausgebildeten, rohrförmigen Fortsatzes 66 abhängig ist. Genauer gesagt ergibt sich das vorbestimmte (Ring)Volumen V im dargestellten Ausführungsbeispiel aus der folgenden Beziehung:

$$V = \frac{L \cdot \pi}{4} \cdot \left( d_G{}^2 - D_F{}^2 \right),$$

wobei

$L$ :     die in die Flüssigkeitskammer 50 vorkragende Länge des Fortsatzes 66,

$d_G$ :     der Innendurchmesser des Gehäuses 44,

$D_F$ :     der Außendurchmesser des Fortsatzes 66 und

$\pi$ :     die Kreiskonstante ist.

Die hydraulische Verbindung 62 zum Kupplungsgeberzylinder 16 hat des weiteren einen vom Gehäuse 44 nach unten abstehenden Anschluß 68, auf den entsprechend Fig. 1 der Hydraulikschlauch 22 zum Kupplungsgeberzylinder 16 aufschiebbar ist und dort geeignet befestigt werden kann. Mit 70 ist ein zylindrisches Durchgangsloch bezeichnet, welches sich durch den Anschluß 68, den Behälterboden 46 und den Fortsatz 66 hindurch erstreckt.

Obgleich im dargestellten Ausführungsbeispiel der Fortsatz 66 einstückig mit dem Behälterboden 46 und dem Anschluß 68 ausgebildet ist, kann der Fortsatz auch durch ein in den Behälterboden einsteckbares Röhrchen (nicht dargestellt) ausgebildet sein, was es gestatten würde, den jeweiligen Erfordernissen entsprechend das vorbestimmte Volumen V durch geeignete Wahl der Länge des Röhrchens zu variieren.

Auf der in Fig. 2 linken Seite des Nachlaufbehälters 12 ist weiterhin ein einstückig mit dem Gehäuse 44 ausgebildeter Befestigungsflansch 72 dargestellt, mittels dessen der Nachlaufbehälter 12 im Motorraum des Kraftfahrzeugs befestigt werden kann. Am in Fig. 2 oberen Ende des Gehäuses 44 ist ein im wesentlichen topfförmiger, vorzugsweise aus einem Kunststoff wie Polypropylen spritzgegossener Deckel 74 vorgesehen, der außenumfangsseitig einen geeignet profilierten Handhabungsabschnitt 76 aufweist und innenumfangsseitig mittels eines Bajonettverschlusses 78 lösbar am Gehäuse 44 befestigt ist. Alternativ dazu könnte hier auch eine Verschraubung vorgesehen sein, insbesondere aus Gründen der Montagevereinfachung bevorzugt wird jedoch der Bajonettverschluß 78.

Der Deckel 74 ist des weiteren mittig mit einer Entlüftungseinrichtung 80 versehen, die in Fig. 2 oben ein am Deckel 74 geeignet festgelegtes Einsatzteil 82 aufweist. Das Einsatzteil 82 dient zum einen dazu, die Entlüftungseinrichtung 80 nach oben abzudecken, damit kein Schmutz in den Nachlaufbehälter 12 hineinfallen kann. Zum anderen kann das Einsatzteil 82 z.B. farblich gekennzeichnet sein, um anzuzeigen, zu welchem hydraulischen Kraftübertragungssystem der Nachlaufbehälter 12 gehört. Die Entlüftungseinrichtung 80 sorgt dafür, daß der oberhalb des Rollbalgs 54 befindliche Raum 84 im Nachlaufbehälter 12 stets mit der Atmosphäre verbunden ist, wozu eine Mehrzahl von gleichmäßig am Umfang der Entlüftungseinrichtung 80 verteilten Verbindungsöffnungen vorgesehen ist, die in der in Fig. 2 gezeigten Schnittebene des Nachlaufbehälters 12 nicht zu erkennen sind. Um u.a. zu verhindern, daß diese Verbindung zur Atmosphäre vom Rollbalg 54 verschlossen wird, wenn dieser in Fig. 2 übermäßig nach oben ausgelenkt werden würde, weist die Entlüftungseinrichtung 80 mittig einen in den Raum 84 vorstehenden Anschlag 86 für den Rollbalg 54 auf. Die hier nicht gezeigten Verbindungsöffnungen zur Atmosphäre münden oberhalb des Anschlags 86 in dem Raum 84.

Wie in Fig. 2 deutlich zu erkennen ist, hat der Rollbalg 54 einen ringförmigen Befestigungsflansch 88, der in Fig. 2 oben zwischen einer stirnseitigen Ringfläche der Behälterwand 48 des Gehäuses 44 und dem am Gehäuse 44 lösbar befestigten Deckel 74 eingespannt ist. Auf der vom Behälterboden 46 abgewandten Seite des Befestigungsflansches 88 sind zwei in der Draufsicht betrachtet ringförmige, konzentrische Dichtwulste 90, 92 vorgesehen. Der innere Dichtwulst 90 hat in einer Ebene senkrecht zur Mittelachse des Nachlaufbehälters 12 gesehen einen Durchmesser, der kleiner ist als ein mittlerer Durchmesser der Behälterwand 48, genauer gesagt der stirnseitigen Ringfläche der Behälterwand 48, während der äußere Dichtwulst 92 hier einen Durchmesser aufweist, der größer ist als der mittlere Durchmesser der Behälterwand 48. Durch diese Ausbildung des Befestigungsflansches 88 ist beim Festdrehen des Deckels 74 am Gehäuse 44 der Deckel 74 bestrebt, den inneren Dichtwulst 90 in das Gehäuse 44 und den äußeren Dichtwulst 92 über das Gehäuse 44 zu drücken. Im Ergebnis wirken die Dichtwulste 90, 92 am mittels des Deckels 74 gegen die Behälterwand 48 des Nachlaufbehälters 12 verspannten Befestigungsflansch 88 des Rollbalgs 54 mit der Behälterwand 48 derart zusammen, daß hier eine zuverlässig dichte Verbindung vorliegt und keinerlei Gefahr besteht, daß sich der Rollbalg 54 vom Gehäuse 44 löst, d.h. der Befestigungsflansch 88 des Rollbalgs 54 bei einer Verformung des Rollbalgs 54 zwischen der Behälterwand 48 und dem Deckel 74 herausgezogen wird.

Im dargestellten Ausführungsbeispiel hat der Rollbalg 54 drei elastisch miteinander verbundene Wandabschnitte 56, 58 und 60.

Der äußere, radial innen an den Befestigungsflansch 88 anschließende Wandabschnitt 56 weist einen Außendurchmesser auf, der im wesentlichen dem Innendurchmesser $d_G$ des Gehäuses 44 entspricht, so daß der äußere Wandabschnitt 56 den Rollbalg 54 bezüglich des Gehäuses 44 zentriert. An den äußeren Wandabschnitt 56 schließt sich über eine untere Rollbiegung 94 der mittlere Wandabschnitt 58 an, der seinerseits über eine obere Rollbiegung 96 mit dem inneren Wandabschnitt 60 verbunden ist. Die Durchmesserabstufung vom äußeren Wandabschnitt 56 zum mittleren Wandabschnitt 58 entspricht im wesentlichen der Durchmesserabstufung vom mittleren Wandabschnitt 58 zum inneren Wandabschnitt 60. Die Wandstärke des äußeren Wandabschnitts 56 ist jedoch größer als die dann konstant bleibende Wandstärke des mittleren und des inneren Wandabschnitts 58, 60.

In Fig. 2 unten an den inneren Wandabschnitt 60 des Rollbalgs 54 schließt sich nach radial innen ein sich im wesentlichen senkrecht zu den Wandabschnitten 56, 58, 60 erstreckender Bodenabschnitt 98 des Rollbalgs 54 an, der eine von einem im wesentlichen hohlzylindrischen Endabschnitt 100 des Rollbalgs 54 begrenzte zentrale Öffnung 102 besitzt. In die zentrale Öffnung 102 ist ein Ventilteil 104 lösbar eingeknüpft, das Bestandteil der im wesentlichen flüssigkeitsdichten aber luftdurchlässigen Verbindung 64 zur Atmosphäre ist. Hierfür ist ein innerer Ringabschnitt 105 des vorzugsweise aus Kunststoff bestehenden Ventilteils 104 außenumfangsseitig mit einer umlaufenden Nut 106 versehen, in die ein vom Endabschnitt 100 des Rollbalgs 54 radial nach innen vorstehender Ringvorsprung 108 formschlüssig eingreift, während sich ein äußerer Ringabschnitt 110 des Ventilteils 104 auf der in Fig. 2 oberen Seite des Bodenabschnitts 98 des Rollbalgs 54 abstützt.

In Fig. 2 nicht zu erkennen sind in einer anderen Schnittebene liegende, gleichmäßig am Umfang verteilte Verbindungsöffnungen im äußeren Ringabschnitt 110 des Ventilteils 104, die den Ringraum zwischen dem inneren Ringabschnitt 105 und dem äußeren Ringabschnitt 110 des Ventilteils 104 stets mit dem Raum 84 oberhalb des Rollbalgs 54 verbinden. Ebenfalls nicht gezeigt, weil in einer anderen Schnittebene liegend, sind zwei am Außenumfang des inneren Ringabschnitts 105 des Ventilteils 104 um 180° versetzt eingebrachte Schlitze, die sich in axialer Richtung des inneren Ringabschnitts 105 erstrecken. In diesen Schlitzen steht in der Gebrauchslage des befüllten Nachlaufbehälters 12 die in der Flüssigkeitskammer 50 belassene Luft an. Übersteigt der Druck des in der Flüssigkeitskammer 50 belassenen Luftvolumens einen vorbestimmten Druck, hebt die in den Schlitzen befindliche Luft in der Art eines Spaltventils den Endabschnitt 100 des Rollbalgs 54 geringfügig von dem inneren Ringabschnitt 105 des Ventilteils 104 ab, so daß Luft durch die Verbindungsöffnungen in dem äußeren Ringabschnitt 110 in den Raum 84 oberhalb des Rollbalgs 54 und von dort über die Entlüftungseinrichtung 80 nach außen entweichen kann.

Es ist ersichtlich, daß sich die Wandabschnitte 58 und 60 des Rollbalgs 54 teleskopartig relativ zueinander und zum äußeren Wandabschnitt 56 bewegen können, wenn der Rollbalg 54 bzw. dessen Bodenabschnitt 98 eine Bewegung in Richtung des Behälterbodens 46 bzw. davon weg ausführt, wobei der Rollbalg 54 auf der zylindrischen Behälterwand 48 des Gehäuses 44 abrollen kann.

Im Vergleich zu herkömmlichen Faltenbälgen ergibt sich aufgrund des Einsatzes des Rollbalgs 54 nicht nur eine leichtere Bewegbarkeit des Bodenabschnitts 98 mit der darin vorgesehenen, im wesentlichen flüssigkeitsdichten aber luftdurchlässigen Verbindung 64 zur Atmosphäre, sondern auch ein größeres Hubvermögen des Bodenabschnitts 98, so daß der Rollbalg 54 auch größeren Volumensschwankungen im Nachlaufbehälter 12 problemlos zu folgen vermag.

Wie eingangs bereits erwähnt, verhindert der beschriebene Fortsatz 66 der hydraulischen Verbindung 62 zum Kupplungsgeberzylinder 16 auf einfache und zuverlässige Weise, daß im befüllten Nachlaufbehälter 12 belassene Luft bei einem Drehen der im Kraftfahrzeug eingebauten hydraulischen Kupplungsbetätigung 10 in den Kupplungsgeberzylinder 16 wandern kann.

Den jeweiligen Erfordernissen entsprechend können beide Maßnahmen - Rollbalg 54 einerseits und Fortsatz 66 andererseits - in Kombination oder nur der Fortsatz 66 zur Anwendung gelangen, um einen in funktioneller Hinsicht verbesserten Nachlaufbehälter 12 bereitzustellen.

Es wird ein Nachlaufbehälter offenbart, der eine Flüssigkeitskammer hat, welche durch einen Behälterboden und eine flexible, nach Maßgabe des Behälterfüllstands relativ zum Behälterboden bewegbare Behälterdecke begrenzt ist, wobei am Behälterboden eine hydraulische Verbindung zu einem Geberzylinder vorgesehen ist, während die Behälterdecke eine im wesentlichen flüssigkeitsdichte aber luftdurchlässige Verbindung zur Atmosphäre aufweist, um einen Druckausgleich zwischen einem in der befüllten Flüssigkeitskammer belassenen Luftvolumen und der Atmosphäre zu ermöglichen. Erfindungsgemäß weist die hydraulische Verbindung zum Geberzylinder einen in die Flüssigkeitskammer vorstehenden Fortsatz auf, der in der Flüssigkeitskammer ein vorbestimmtes Volumen definiert, welches größer ist als das in der befüllten Flüssigkeitskammer belassene Luftvolumen. In Ergänzung dazu kann die Behälterdecke durch einen Rollbalg ausgebildet sein, der mehrere wenigstens im unverformten Zustand im wesentlichen konzentrische Wandabschnitte aufweist. Im Ergebnis wird ein gegenüber dem Stand der Technik funktionell verbesserter Nachlaufbehälter geschaffen.

Bezugszeichenliste

| 10 | hydraulische Kupplungsbetätigung |
| 12 | Nachlaufbehälter |
| 14 | Kupplungspedal |
| 16 | Kupplungsgeberzylinder |
| 18 | Kupplung |
| 20 | Kupplungsnehmerzylinder |
| 22 | Hydraulikschlauch |
| 24 | Nachlaufanschluß |
| 26 | Druckanschluß |
| 28 | Hydraulikleitung |
| 30 | Druckanschluß |
| 32 | Ausrückgabel |
| 34 | Ausrücklager |
| 36 | Ausrückmechanismus |
| 38 | Kupplungsdruckplatte |
| 40 | Kupplungsscheibe |
| 42 | Gehäuse |
| 44 | Gehäuse |
| 46 | Behälterboden |
| 48 | Behälterwand |

| 50 | Flüssigkeitskammer |
| 52 | flexible Behälterdecke |
| 54 | Rollbalg |
| 56 | äußerer Wandabschnitt |
| 58 | mittlerer Wandabschnitt |
| 60 | innerer Wandabschnitt |
| 62 | hydraulische Verbindung zum Geberzylinder |
| 64 | luftdurchlässige Verbindung zur Atmosphäre |
| 66 | Fortsatz |
| 68 | Anschluß |
| 70 | Durchgangsloch |
| 72 | Befestigungsflansch |
| 74 | Deckel |
| 76 | Handhabungsabschnitt |
| 78 | Bajonettverschluß |
| 80 | Entlüftungseinrichtung |
| 82 | Einsatzteil |
| 84 | Raum |
| 86 | Anschlag |
| 88 | Befestigungsflansch |
| 90 | innerer Dichtwulst |
| 92 | äußerer Dichtwulst |
| 94 | untere Rollbiegung |
| 96 | obere Rollbiegung |
| 98 | Bodenabschnitt |
| 100 | Endabschnitt |
| 102 | Öffnung |
| 104 | Ventilteil |
| 105 | innerer Ringabschnitt |
| 106 | Nut |
| 108 | Ringvorsprung |
| 110 | äußerer Ringabschnitt |

**Patentansprüche**

1. Nachlaufbehälter (12) für einen Geberzylinder (16) eines hydraulischen Kraftübertragungssystems, insbesondere einer hydraulischen Kupplungsbetätigung (10) oder Bremsanlage, mit einer Flüssigkeitskammer (50), welche durch einen Behälterboden (46) und eine flexible Behälterdecke (52) begrenzt ist, die nach Maßgabe des Behälterfüllstands in Richtung des Behälterbodens (46) bzw. davon weg bewegbar ist, wobei am Behälterboden (46) eine hydraulische Verbindung (62) zum Geberzylinder (16) vorgesehen ist, während die Behälterdecke (52) eine im wesentlichen flüssigkeitsdichte aber luftdurchlässige Verbindung (64) zur Atmosphäre aufweist, um einen Druckausgleich zwischen einem im befüllten Zustand des Kraftübertragungssystems in der Flüssigkeitskammer (50) belassenen Luftvolumen und der Atmosphäre zu ermöglichen, **dadurch gekennzeichnet, daß** die hydraulische Verbindung (62) zum Geberzylinder (16) einen in die Flüssigkeitskammer (50) hinein vorstehenden Fortsatz (66) aufweist, der in der Flüssigkeitskammer (50) ein vorbestimmtes Volumen (V)

definiert, welches größer ist als das im befüllten Zustand des Kraftübertragungssystems in der Flüssigkeitskammer (50) belassene Luftvolumen.

2. Nachlaufbehälter (12) nach Anspruch 1, **dadurch gekennzeichnet, daß** der Fortsatz (66) im wesentlichen mittig am Behälterboden (46) vorgesehen ist.

3. Nachlaufbehälter (12) nach Anspruch 1 oder 2, **dadurch gekennzeichnet, daß** der Fortsatz (66) rohrförmig ist.

4. Nachlaufbehälter (12) nach einem der vorhergehenden Ansprüche, **dadurch gekennzeichnet, daß** der Fortsatz (66) einstückig mit dem Behälterboden (46) ausgebildet und vorzugsweise aus Kunststoff spritzgegossen ist.

5. Nachlaufbehälter (12) nach einem der Ansprüche 1 bis 3, **dadurch gekennzeichnet, daß** der Fortsatz (66) durch ein in den Behälterboden (46) einsteckbares Röhrchen ausgebildet ist.

6. Nachlaufbehälter (12) nach einem der vorhergehenden Ansprüche, **dadurch gekennzeichnet, daß** die flexible Behälterdecke (52) durch einen Rollbalg (54) ausgebildet ist, der eine Mehrzahl von wenigstens im unverformten Zustand im wesentlichen konzentrischen Wandabschnitten (56, 58, 60) aufweist.

7. Nachlaufbehälter (12) nach Anspruch 6, **dadurch gekennzeichnet, daß** der Rollbalg (54) bei einer Bewegung in Richtung des Behälterbodens (46) bzw. davon weg auf einer zylindrischen Seitenwand (48) des Nachlaufbehälters (12) abrollt.

8. Nachlaufbehälter (12) nach Anspruch 6 oder 7, **dadurch gekennzeichnet, daß** der Rollbalg (54) einen ringförmigen Befestigungsflansch (88) aufweist, der zwischen einer Seitenwand (48) des Nachlaufbehälters (12) und einem am Nachlaufbehälter (12) lösbar befestigten Deckel (74) eingespannt ist.

9. Nachlaufbehälter (12) nach Anspruch 8, **dadurch gekennzeichnet, daß** der Befestigungsflansch (88) mit zwei ringförmigen, konzentrischen Dichtwulsten (90, 92) versehen ist, wobei der innere Dichtwulst (90) einen Durchmesser hat, der kleiner ist als ein mittlerer Durchmesser der Seitenwand (48), während der äußere Dichtwulst (92) einen Durchmesser aufweist, der größer ist als der mittlere Durchmesser der Seitenwand (48).

10. Nachlaufbehälter (12) nach Anspruch 9, **dadurch gekennzeichnet, daß** die Dichtwulste (90, 92) an der vom Behälterboden (46) abgewandten Seite des Befestigungsflansches (88) vorgesehen sind.

11. Nachlaufbehälter (12) nach einem der Ansprüche 6 bis 10, **dadurch gekennzeichnet, daß** der Rollbalg (54) drei miteinander elastisch verbundene Wandabschnitte (56, 58, 60) hat, wobei die beiden inneren Wandabschnitte (58, 60) eine Wandstärke aufweisen, die kleiner ist als die Wandstärke des äußeren Wandabschnitts (56).

12. Nachlaufbehälter (12) nach einem der Ansprüche 6 bis 11, **dadurch gekennzeichnet, daß** der Rollbalg (54) einen sich im wesentlichen senkrecht zu den Wandabschnitten (56, 58, 60) erstreckenden Bodenabschnitt (98) aufweist, der eine zentrale Öffnung (102) besitzt, in die ein Ventilteil (104) lösbar eingeknüpft ist, das der im wesentlichen flüssigkeitsdichten aber luftdurchlässigen Verbindung zur Atmosphäre dient.

13. Nachlaufbehälter (12) nach einem der vorhergehenden Ansprüche, **dadurch gekennzeichnet, daß** der Nachlaufbehälter (12) separat von einem Gehäuse (42) des Geberzylinders (16) ausgebildet ist.

**Claims**

1. An expansion reservoir (12) for a master cylinder (16) of a hydraulic force transmission system, in particular a hydraulic clutch control (10) or brake system, the reservoir having a fluid chamber (50) defined by a reservoir bottom (46) and a flexible reservoir top (52) which may be moved towards the reservoir bottom (46) or away therefrom as a function of a filling level of the reservoir, wherein a hydraulic connection (62) to the master cylinder (16) is provided at the reservoir bottom (46) while the reservoir top (52) comprises a substantially liquid-tight but air-permeable connection (64) to the atmosphere in order to allow pressure compensation between an air volume left in the fluid chamber (50) when the force transmission system is in the filled state and the atmosphere, **characterized in that** the hydraulic connection (62) to the master cylinder (16) comprises an extension (66) protruding into the fluid chamber (50), which extension defines a predetermined volume (V) in the fluid chamber (50) which is larger than the volume of air left in the fluid chamber (50) when the force transmission system is in the filled state.

2. An expansion reservoir (12) according to claim 1, **characterized in that** the extension (66) is provided substantially centrally on the reservoir bottom (46).

3. An expansion reservoir (12) according to claim 1 or 2, **characterized in that** the extension (66) is tubular.

4. An expansion reservoir (12) according to one of the preceding claims, **characterized in that** the extension (66) is constructed in one piece with the reservoir bottom (46) and is preferably injection-molded from plastics material.

5. An expansion reservoir (12) according to one of the claims 1 to 3, **characterized in that** the extension (66) takes the form of a small tube insertable into the reservoir bottom (46).

6. An expansion reservoir (12) according to one of the preceding claims, **characterized in that** the flexible reservoir top (52) takes the form of a rolling lobe bellows (54) comprising a plurality of wall portions (56, 58, 60) which are substantially concentric at least in an undeformed state.

7. An expansion reservoir (12) according to claim 6, **characterized in that** the rolling lobe bellows (54) rolls over a cylindrical side wall (48) of the expansion reservoir (12) when it moves towards the reservoir bottom (46) or away therefrom.

8. An expansion reservoir (12) according to claim 6 or 7, **characterized in that** the rolling lobe bellows (54) comprises an annular fastening flange (88), which is gripped between a side wall (48) of the expansion reservoir (12) and a cover (74) attached detachably to the expansion reservoir (12).

9. An expansion reservoir (12) according to claim 8, **characterized in that** the fastening flange (88) is provided with two annular, concentric sealing beads (90, 92), wherein the inner sealing bead (90) has a diameter which is smaller than an average diameter of the side wall (48), while the outer sealing bead (92) has a diameter which is larger than the average diameter of the side wall (48).

10. An expansion reservoir (12) according to claim 9, **characterized in that** the sealing beads (90, 92) are provided on the side of the fastening flange (88) facing away from the reservoir bottom (46).

11. An expansion reservoir (12) according to one of the claims 6 to 10, **characterized in that** the rolling lobe bellows (54) has three resiliently interconnected wall portions (56, 58, 60), wherein the inner two wall portions (58, 60) exhibit a wall thickness which is smaller than the wall thickness of the outer wall portion (56).

12. An expansion reservoir (12) according to one of the claims 6 to 11, **characterized in that** the rolling lobe bellows (54) has a base portion (98) extending substantially perpendicularly to the wall portions (56, 58, 60), which base portion comprises a central opening (102), into which a valve element (104) is detachably hooked which serves in providing the substantially liquid-tight but air-permeable connection to the atmosphere.

13. An expansion reservoir (12) according to one of the preceding claims, **characterized in that** the expansion reservoir (12) is constructed separately from a housing (42) of the master cylinder (16).

**Revendications**

1. Réservoir de complément de fluide (12) pour un cylindre émetteur (16) d'un système hydraulique de transmission de force, en particulier d'un actionnement hydraulique d'embrayage (10) ou d'une installation de frein, comportant une chambre à liquide (50) délimitée par un fond de réservoir (46) et par une couverture flexible de réservoir (52) et mobile en direction du fond de réservoir (46) ou en éloignement de celui-ci en fonction du niveau de remplissage du réservoir, une liaison hydraulique (62) vers le cylindre émetteur (16) étant prévue au fond de réservoir (46), tandis que la couverture de réservoir (52) présente une liaison (64) sensiblement étanche aux liquides mais perméable à l'air vers l'atmosphère, afin de permettre une compensation de pression entre un volume d'air, resté dans la chambre à liquide (50) dans l'état rempli du système de transmission de force, et l'atmosphère, **caractérisé en ce que** la liaison hydraulique (62) vers le cylindre émetteur (16) comprend un prolongement (66) qui fait saillie dans la chambre à liquide (50) et qui définit un volume prédéterminé dans la chambre à liquide (50), qui est supérieur au volume d'air resté dans la chambre à liquide (50) dans l'état rempli du système de transmission de force.

2. Réservoir de complément de fluide (12) selon la revendication 1, **caractérisé en ce que** le prolongement (66) est prévu sensiblement au milieu du fond de réservoir (46).

3. Réservoir de complément de fluide (12) selon l'une ou l'autre des revendications 1 et 2, **caractérisé en ce que** le prolongement (66) est de forme tubulaire.

4. Réservoir de complément de fluide (12) selon l'une des revendications précédentes, **caractérisé en ce que** le prolongement (66) est réalisé d'un seul tenant avec le fond de réservoir (46) et est de préférence coulé par injection en matière plastique.

**5.** Réservoir de complément de fluide (12) selon l'une des revendications 1 à 3, **caractérisé en ce que** le prolongement (66) est formé par un petit tube enfichable dans le fond de réservoir (46).

**6.** Réservoir de complément de fluide (12) selon l'une des revendications précédentes, **caractérisé en ce que** la couverture flexible de réservoir (52) est réalisée par un soufflet déroulant (54) qui comprend une pluralité de tronçons de paroi (56, 58, 60) sensiblement concentriques au moins dans l'état non déformé.

**7.** Réservoir de complément de fluide (12) selon la revendication 6, **caractérisé en ce que** le soufflet déroulant (54) roule sur une paroi latérale cylindrique (48) du réservoir de complément de fluide (12) lors d'un mouvement en direction du fond de réservoir (46) ou en éloignement de celui-ci.

**8.** Réservoir de complément de fluide (12) selon l'une ou l'autre des revendications 6 et 7, **caractérisé en ce que** le soufflet déroulant (54) comprend une bride de fixation annulaire (88) qui est serrée entre une paroi latérale (48) du réservoir de complément de fluide (12) et un couvercle (74) fixé de façon amovible sur ce réservoir (12).

**9.** Réservoir de complément de fluide (12) selon la revendication 8, **caractérisé en ce que** la bride de fixation (88) est pourvue de deux bourrelets d'étanchement (90, 92) concentriques annulaires, le bourrelet d'étanchement intérieur (90) présentant un diamètre inférieur à un diamètre moyen de la paroi latérale (48), tandis que le bourrelet d'étanchement extérieur (92) présente un diamètre supérieur au diamètre moyen de la paroi latérale (48).

**10.** Réservoir de complément de fluide (12) selon la revendication 9, **caractérisé en ce que** les bourrelets d'étanchement (90, 92) sont prévus sur le côté de la bride de fixation (88) détourné du fond de réservoir (46).

**11.** Réservoir de complément de fluide (12) selon l'une des revendications 6 à 10, **caractérisé en ce que** le soufflet déroulant (54) comprend trois tronçons de paroi (56, 58, 60) reliés élastiquement les uns aux autres, les deux tronçons de paroi intérieurs (58, 60) présentant une épaisseur de paroi qui est inférieure à l'épaisseur du tronçon de paroi extérieur (56).

**12.** Réservoir de complément de fluide (12) selon l'une des revendications 6 à 11, **caractérisé en ce que** le soufflet déroulant (54) comprend un tronçon de fond (98) qui s'étend sensiblement perpendiculairement aux tronçons de paroi (56, 58, 60) et qui possède une ouverture centrale (102) dans laquelle est boutonnée de façon amovible un élément formant valve (104) qui sert à la liaison sensiblement étanche aux liquides mais perméable à l'air vers l'atmosphère.

**13.** Réservoir de complément de fluide (12) selon l'une des revendications précédentes, **caractérisé en ce que** le réservoir de complément de fluide (12) est réalisé séparément d'un boîtier (42) du cylindre émetteur (16).

FIG. 1

FIG. 2